# EUROPEAN PATENT APPLICATION

(11) **EP 1 107 148 A2**
(43) Date of publication of application: **13.06.2001**
(21) Application number: 00126883.8
(22) Date of filing: 07.12.2000
(51) Int. Cl.: G06F 17/60

(54) **Electronic mail system for controlling important message display**

(30) Priority: 08.12.1999 JP 34854899
(71) Applicant: SHARP KABUSHIKI KAISHA, Osaka 545-8522 (JP)
(72) Inventor: Yoshida, Tsutomu, Yamatokoriyama-shi, Nara 639-1103 (JP)
(74) Representative: MÜLLER & HOFFMANN Patentanwälte

(57) **Abstract**

An electric mail system includes a plurality of communication units in which comprises a sending section for sending an e-mail, a receiving section for receiving the e-mail, a display section for displaying the e-mail, and a mail data storing section for storing the sent and received e-mails. The e-mail comprises a mail header including an extension field, a mail text and an attachment file. The display section comprises a mail list display area, a mail content display area and an important message display area. The sending section comprises a mail preparing section for inserting in the extension field a control code defining a certain operation and attaching an important message as an attachment file at the sending of the e-mail. The receiving section comprises an extract section for extracting the control code inserted in the extension field. At the extraction of the control code by the extract section, the display section displays the important message attached to the received e-mail in the important message display area.

## Description

### BACKGROUND OF THE INVENTION

### 1.Field of the Invention

The present invention relates to an electronic mail (e-mail) system. In particular, it relates to an e-mail system which controls sending and receiving of e-mails with additional information attached, i.e., confidential mails, direct mails and the like.

### 2.Description of Related Art

Sending a message such as advertisement or an important notice through network has conventionally been achieved by writing the message in a public page of a WWW site, writing the message as an e-mail text or a part thereof to send the message through an e-mail system, or inserting the message in the e-mail as an attachment file to send the thus attached e-mail as an ordinary e-mail. When the e-mail with the attached important message file is sent, a recipient of the e-mail often overlooks the important message since the e-mail with the important message is difficult to be distinguished from the increasing everyday e-mails. Particularly, when the advertisement is sent by the e-mail, the advertisement is once displayed in the e-mail text, but disappears with the e-mail text from a display screen when the user selects another e-mail. Thus, the advertisement has not been noticed very much by the recipient.

Japanese Unexamined Patent Publication No. HEI 10 (1998)-320314 discloses a device for inserting the advertisement in the e-mail which performs the sending, receiving and transmission of the e-mail, and a recording medium containing a program for carrying out the advertisement insertion to the e-mail. The publication points out that the conventional e-mail systems do not have a function of advertisement insertion, and therefore the sender of the e-mail must directly write the advertisement in the e-mail text or the signature column by himself. As a solution to such inconvenience, the publication discloses the device for inserting the advertisement in the e-mail which allows automatic insertion of the advertisement at the sending, receiving and transmission of the e-mail without causing any discomfort, provided with a storing section for storing the advertisement, a selecting section for selecting the advertisement to be inserted in the e-mail, a judging section for judging whether the selected advertisement should be inserted or not, and an inserting section for reading the advertisement selected by the selecting section out of the storing section and inserting it in the e-mail in response to the result of the judging section.

However, the above publication does not specifically explain how the inserted advertisement is displayed to the recipient. Therefore the conventional problem remains unsolved that the advertisement attached to the e-mail text becomes unseen when another mail is selected. Additionally, the advertisement attached to the e-mail cannot be seen by the recipient unless he/she selects the e-mail and scrolls or turns the page to display the advertisement. The publication also describes that the advertisement insertion can be varied by utilizing random numbers, a record of sent advertisement or an attribute such as age, sex and the like of the recipient. However, these control operations are only for the senders so that the recipients cannot avoid the unwanted advertisement or restrict the advertisement e-mails when such mails are numerous.

In addition to the advertisement insertion as described above, which is an important object for the senders, the case where the recipient must notice the important message is also inevitable. For example, an announcement of temporary suspension of the system from a contracted provider to the users, which is an important message that must be known by the users otherwise causes critical situation to them, should not be lost in a huge amount of the other e-mails. A solution for such a situation has been required.

### SUMMARY OF THE INVENTION

The present invention relates to an e-mail system having a plurality of communication units connected each other through a network. The communication unit comprises a sending section for sending an electric mail, a receiving section for receiving the electric mail, a display section for displaying the electric mail, and a mail data storing section for storing the sent and received electric mails, the electric mail, which is sent from the communication unit, including a mail header having an extension field, a mail text and an attachment file, the sending section including a mail preparing section for inserting in the extension field a control code defining a certain operation and attaching an important message as an attachment file at the sending of the electric mail, and the display section including a mail list display area, a mail content display area and an important message display area, the receiving section of the communication unit operating as a receive device including an extract section for extracting the control code inserted in the extension field, wherein the display section displays the important message attached to the received electric mail in the important message display area when the extract section extracts the control code from the received electric mail.

According to the present invention, the received important message can continuously be displayed in a certain area of a display screen while being clearly distinguished from other ordinary e-mails.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a block diagram for illustrating a structure of an e-mail system according to the prior art;
Fig. 2 is a block diagram for illustrating a structure of an e-mail system capable of controlling important message display according to the present invention;
Fig. 3 is a flow chart for illustrating the steps of preparing an e-mail in the e-mail system according to the prior art;
Fig. 4 is a flow chart for illustrating the steps of preparing an e-mail in the e-mail system capable of controlling the important message display according to the present invention;
Fig. 5 is a view showing the features of a mail header of the e-mail system capable of controlling the important message display according to the present invention;
Fig. 6 is a flow chart for illustrating the steps of mail extraction in the e-mail system capable of controlling the important message display according to the present invention; and
Figs. 7(a) and 7(b) are views for illustrating a mode for displaying plural important messages in the e-mail system capable of controlling the important message display according to the present invention.

### DESCRIPTION OF THE PREFERRED EMBODIMENTS

The object of the present invention is to provide an e-mail system capable of displaying an important message, which should not be overlooked by the recipient or the recipient must notice, while clearly discriminating it from other e-mails.

The present invention is an e-mail system comprising a sending section for sending an e-mail, a receiving section for receiving the e-mail, a display section for displaying the received e-mail, and a mail data storing section for storing the sent and received e-mails. The e-mail comprises a mail header including an extension field, a mail text and an attachment file. The display section comprises a mail list display area, a mail content display area and an important message display area. The sending section comprises a mail preparing section for inserting in the extension field a control code defining a certain operation and attaching an important message as an attachment file at the sending of the e-mail. The receiving section comprises an extract section for extracting the control code inserted in the extension field. At the extraction of the control code by the extract section, the display section displays the important message attached to the received e-mail in the important message display area.

According to the present invention, provided is an e-mail system further comprising an adding section for adding distinctive information informing that the important message is effective to the e-mail sent from a particular sender, a detecting section for detecting the distinctive information in the e-mail with the distinctive information added by the adding section, and a control section for controlling the display of the important message in the important message display area when the e-mail attached with the important message is received and the distinctive information is detected in the received e-mail.

In the present invention, the control code may define a display period and a valid period of the important message.

When a plurality of the important messages are attached to an e-mail, the display section may divide the important message display area to display the important messages.

Alternatively, when the plurality of important messages are attached to an e-mail, the display section may time-divides the important message display area to display the plural important messages.

Hereinafter, an embodiment of the e-mail system capable of controlling the important message display according to the present invention will be described with reference to the figures. The term "message" described in the figures signifies the important message used in the specification.

In the present invention, POP3 (Post Office Protocol Version 3) and SMTP (Simple Mail Transfer Protocol) are used as a server/client type mail system. HTML (HyperText Markup Language) file is used as the attachment file. MIME (Multipurpose Internet Mail Extensions) is used as a rule for attaching the file to the e-mail. The POP3 is defined by RFC1939, SMTP by RFC821, HTML by RFC1866, and MIME by RFC2045 to 2049.

In the present invention, a digital signature is used in accordance with known techniques such as the one disclosed in Japanese Unexamined Patent Publication No. HEI 3(1991)-82240.

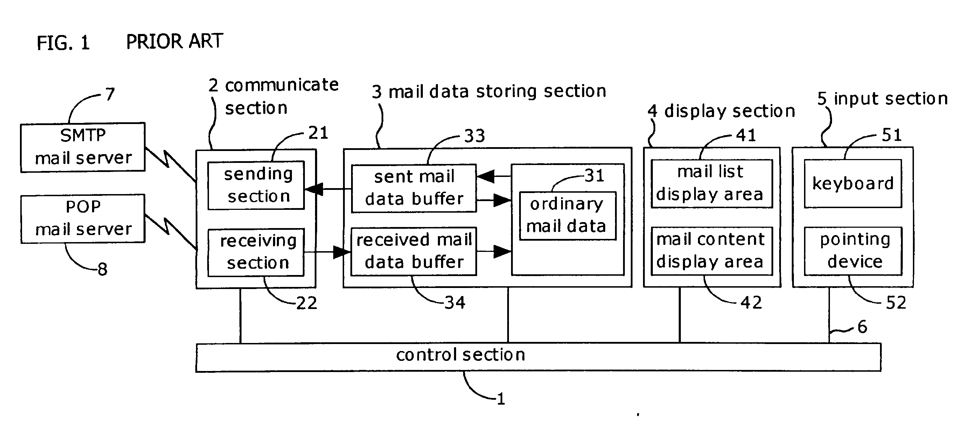

Referring to Fig. 1, a block diagram is shown for illustrating a structure of an e-mail system according to the prior art.

A control section 1 comprises a control circuit such as CPU and is connected to other components to be described later via a bus 6 to exchange data and command instructions therebetween.

A communicate section 2 is a unit for controlling communication functions (communication system, communication device and the like), electric level of signals and protocols. The communicate section 2 is made of hardware or firmware constructed of circuits and includes a sending section 21 and a receiving section 22. The sending section 21 establishes the connection with a SMTP mail server 7 to send the e-mail to the SMTP mail server 7. The receiving section 22 establishes the connection with a POP3 mail server 8 to receive the e-mail that has arrived at the POP3 mail server 8.

A mail data storing section 3 is constructed of a memory device such as RAM, ROM and a disc. The mail data storing section 3 includes an ordinary mail data storing section 31 for storing data prepared in accordance with the existing rule such as the above-mentioned RFC821 (for the SMTP) and RFC1939 (for the POP3), a sent mail data buffer 33 used for the e-mail transmission and a received mail data buffer 34 used for receiving the e-mail.

A display section 4 is constructed of a display device having a display screen such as CRT, liquid crystal display or the like. The display screen comprises a mail list display area 41 for displaying index information such as title, destination address and date of the sent and received e-mails, and a mail content display area 42 for displaying the content of the e-mail. The mail content display area 42 can display the mail content of one mail selected from the index information list displayed in the mail list display area 41.

An input section 5 may be any kind of input device such as a keyboard, mouse, pen and the like. This embodiment employs a keyboard 51 and a pointing device 52. The purport of the present invention is not limited to these particular devices.

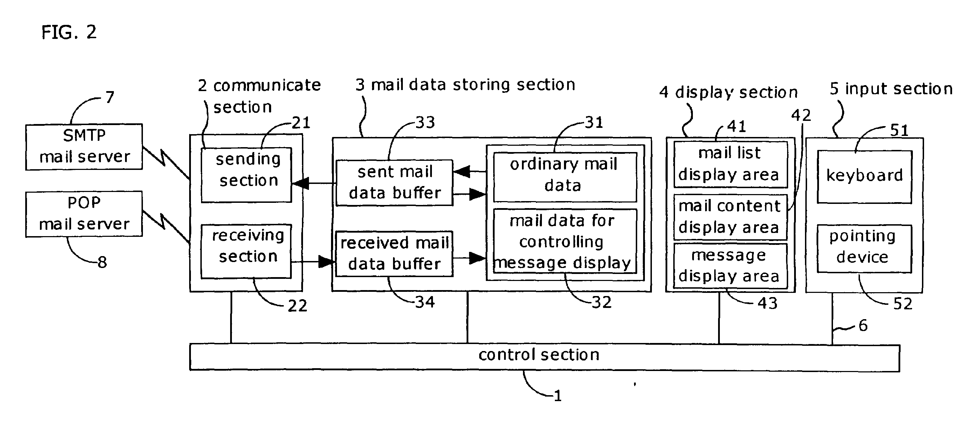

Referring to Fig. 2, a block diagram is shown for illustrating a structure of the e-mail system capable of controlling the important message display according to the present invention. The basic structure is already shown in Fig. 1 so that components particular to the present invention will be described below.

In addition to the ordinary mail data storing section 31 according to the prior art system, the mail data storing section 3 of the present invention further includes an important mail data storing section 32 for storing mail data for controlling the important message display.

Further, in addition to the mail list display area 41 and the mail content display area 42 according to the prior art system, the display section 4 of the present invention further includes an important message display area 43.

That is, the features of the present invention are that the important mail data storing section 32 is provided for storing the mail data for controlling the important message display, and the important message display area 43 is separately provided on the display screen of the display section 4 for displaying the important message when a mail for controlling the important message display is received.

The connections of the communicate section 2 with the SMTP mail server 7 and the POP3 mail server 8 are established by using public circuits such as cables, or through a communication network to the externals, including the Internet. The communicate section 2 may be provided with hardware which communicates with other components thorough infrared rays (e.g., communication with IrDA).

The structure shown in Fig. 2 is an exemplary embodiment, to which the present invention is not limited.

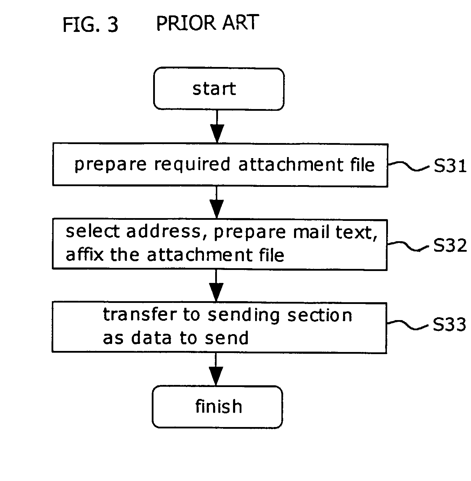

Next, the steps of preparing the e-mail will be described. Fig. 3 shows a flow chart for illustrating the steps of preparing the e-mail according to the prior art.

First, an attachment file is prepared, if necessary (step S31). Then, the address to which the e-mail is sent is selected, the mail text is prepared and the attachment file is affixed (step S32). By pressing a key or the like, the instruction to send the thus prepared e-mail is performed (step S33). At this time, data of this mail is transmitted to the sending section 21 through the sent mail data buffer 33.

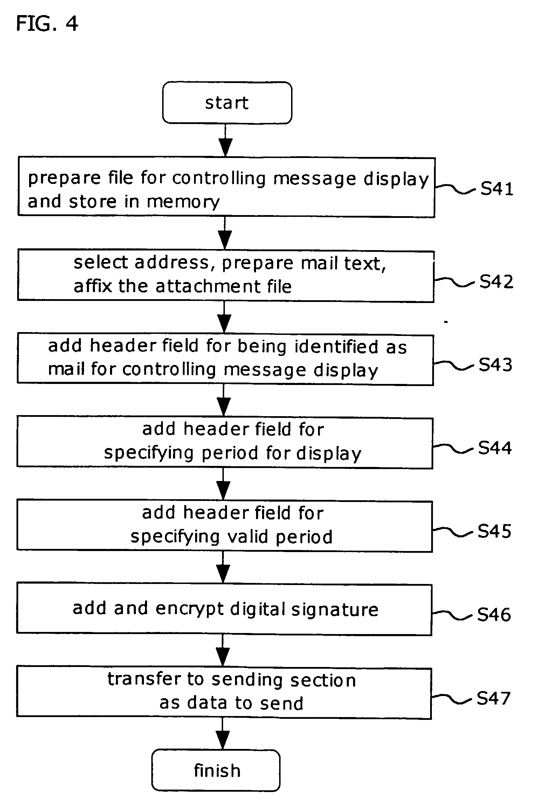

Fig. 4 shows a flow chart for illustrating the steps of preparing the e-mail in the e-mail system capable of controlling the important message display according to the present invention.

First, a user prepares a mail data file for controlling the important message display (HTML file is also possible) and saves it in the mail data storing section 3 (step S41).

Then, the user selects the address, and then attaches the mail data file for controlling the important message display to the e-mail in a mail-preparing screen which is not shown (step S42). The data file is in accordance with the above-mentioned rule for MIME.

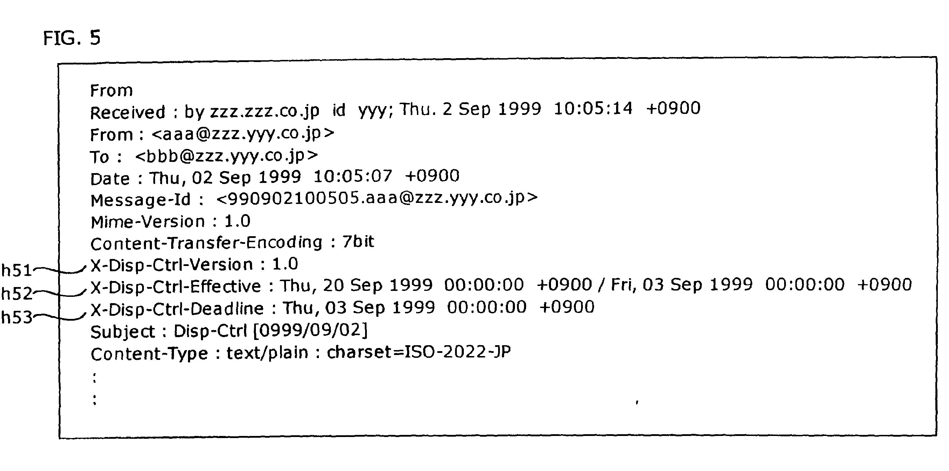

Then, the control section 1 adds to the mail header a particular extension field for signifying that the e-mail which is to be sent is a mail for controlling the important message display (step S43). The extension field starts with "X-" as indicated by h51 to h53 in Fig. 5 and follows the above-mentioned RFC822.

In the present invention, the extension field contains three kinds of separate control field.

### 1. X-Disp-Ctrl-Version

This signifies the version number. The version number is 1.0, for example, but it can be extended depending on the use. The information is referred to establish operation consistency with a former version.

### 2. X-Disp-Ctrl-Effective

This specifies a period for displaying the attached important message.

### 3. X-Disp-Ctrl-Deadline

This specifies a valid period of the attached important message. For example, when a deadline is established depending on the mail content, the valid period expires at the deadline. Thus, the important message, which turns to be unnecessary after expiration of the period, is not displayed.

By utilizing these control fields, the control section 1 attaches the particular extension field for signifying the display period of the e-mail for controlling the important message display (step S44), or attaches a particular extension field for signifying the valid period of the important message (step S45).

Further, to prevent the abuse of the system for controlling the important message display, a digital signature is attached so that the recipient can distinguish the reliability of the received data. The digital signature is encrypted to prevent the falsification by others and the correspondency with the mail text is established (step S46). In this embodiment, PGP/ MINE defined by RFC2015 is employed as the encryption technique.

The thus prepared mail data for controlling the important message display is sent to the sent mail data buffer 33 (step S47) and transmitted to the SMTP mail server 7 through the communicate section 2 as in the same manner for sending ordinary mails. The transmitted e-mail arrives at an intended server through a telecommunication circuit which is not shown. At the recipient mail system, in response to the instruction of the control section 1, a connection is established with the POP3 mail server 8 through the communicate section 2 and the mail data is acquired in accordance with the POP3 protocol. At this time, the mail for controlling the important message display prepared by the sender is received in the same manner as the ordinary mails since it is merely added with the particular extension field in the mail header.

At the recipient mail system, the important message display area 43 is provided separately from other display areas. Therefore, the attached important message can be displayed with clear distinction from the mail text and the like shown in other display areas. Further, to prevent the important message from being overlapped to be unseen with other display areas, the important message may be displayed in the forefront of the display screen by giving the priority on it.

Further, a flag for signifying whether the important message is being displayed or not may be added, so that the important message display area 43 cannot be unseen during the display of the important message. Thus, by establishing the limitation to the operation of the important message display area 43, it is expected that the sent important message is surely noticed by the recipient. This is effective, for example, in the case where a contracted provider announces the temporary suspension of the system to the users.

Where a plurality of effective e-mails each containing the important message are received, or an e-mail containing plural important messages is received, the important message display area 43 may be divided to show the important messages individually. Alternatively, the important message display area may be time-shared to display the important messages in turn.

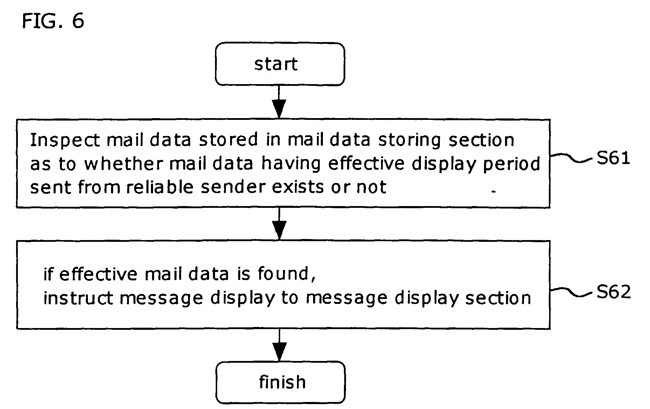

Fig. 6 shows a flow chart for illustrating the steps of mail extraction in the e-mail system capable of controlling the important message display according to the present invention.

After receiving the e-mail, the control section 1 inspects the mail header (step S61). When the extension field as indicated by h51 to h53 in Fig. 5 is found in the mail header, the display period or the valid period of the important message is extracted from the field content. Then, the reliability of the sender is checked up from the digital signature. When the sender is recognized as a reliable one, the e-mail is recognized as the e-mail for controlling the important message display and handled in a different way from other ordinary e-mails.

Next, the control section 1 analyzes the content of the mail header. If there is the e-mail for controlling the important message display sent by the reliable sender within its display period, the control section 1 instructs the display section 4 to display the important message (step S62).

It may be possible to provide the e-mail for controlling the important message display with a flag until the valid period thereof expires so that the recipient cannot delete the e-mail. Alternatively, the e-mail for controlling the important message may not be displayed in the mail list display section 41 so as to avoid maloperation and confusion of the recipient. Further, the control section 1 inspects whether the display period of the e-mail for controlling the important message display has expired or not. If the period has expired, the display of the important message may be finished to empty the area occupied by the important message in the important message display area 43. Alternatively, the important message display area 43 itself may be closed, or the display and the closing may be freely operated by the recipient.

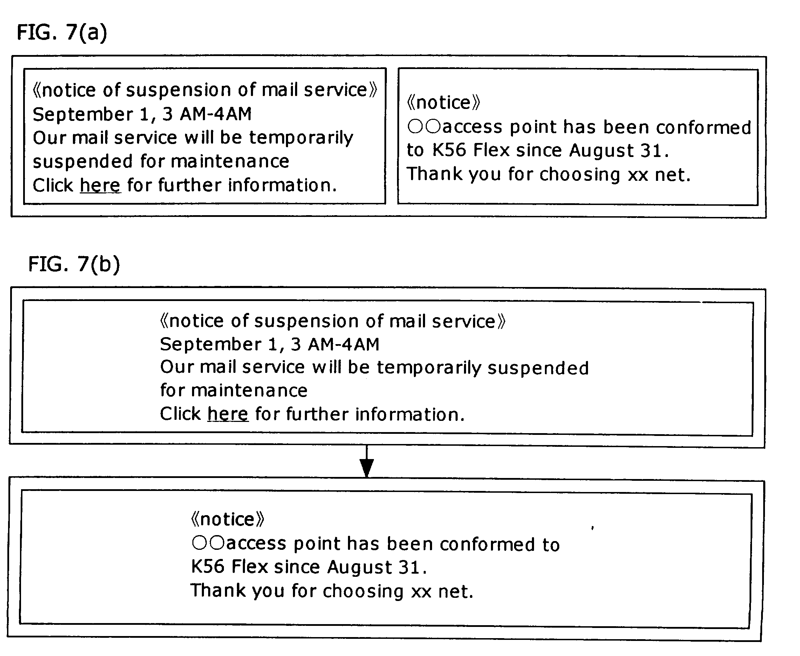

Figs. 7(a) and 7(b) show views for illustrating a mode for displaying the plural important messages. As described above, if the plural e-mails each containing the important message are received, the important message display area is divided to display the important messages individually, or the important message display area is time-shared to display the important messages in turn. Fig. 7(a) shows an embodiment in which the important message display area 43 is divided in two areas which are displayed simultaneously. Fig. 7(b) shows an embodiment in which one important message display area displays one important message for a certain period and then displays another important message.

If the important message display area 43 displays the important message with hyperlinks or the like, the recipient can easily access to the related information from the important message, which brings improved convenience. Further, if the history of the access to the related information is stored and analyzed to send back the analysis results to the sender of the important message, the sender can reflect the results for the preparation of subsequent important message mails. This enables more effective transmission of the important message.

In the received e-mail for controlling the important message display, computer viruses may possibly be contained. Accordingly, if the recipient mail system is constructed to inspect whether the virus exists or not in the e-mail for controlling the important message display, a safer system can be provided.

The above-mentioned e-mail system capable of controlling the important message display can also be achieved easily by software. In such a case, a program for performing the above procedures is recorded in a memory medium, so that the e-mail system can be distributed in the shape of the memory medium. External recording media can be employed as the memory medium for recording the program according to the present invention. Examples thereof include, in addition to tape systems such as cassettes and magnetic tapes, magnetic disc systems such as FD and HD, optical disc systems such as CD-ROM, MO, MD and DVD, card systems such as IC cards, optical cards and the like. Exchangeable semiconductor memory devices may also be possible. In addition to the above-mentioned media which will be secured or pivotally supported, media for flexibly storing the program or data may also be possible. Examples thereof include communication media for transmitting programs or data through the communication network. That is, the program or data may be downloaded from the external communication network, or installed from the above-mentioned external recording media through a supplementary recording device which is not shown.

The advantage of the e-mail system capable of controlling the important message display according to the present invention is that the received important message is continuously displayed in a certain area of the display screen distinctively from other ordinary mails. More specifically, the present invention is advantageous in the following points.

Since the mail system hardware which has already prevailed can be utilized, the e-mail system of the invention can easily be introduced. The information concerning the control of the important message display can often be updated since the mail transmit/receive operation is often carried out. Also, the information concerning the control of the important message display can flexibly be extended. Further, since the important message display area is provided separately from the display areas for the mail list and the mail text, the important message can be displayed while being clearly distinguished from other ordinary mails. This allows to precisely inform the recipient that the e-mail is different from the ordinary mails.

Further, the digital signature is introduced to the information of the important message display control so that only the information sent from a particular sender is recognized as effective. Accordingly, it is possible to receive the e-mails for controlling the important message display only from the reliable senders and prevent the ones from a malicious third person.

Since it is possible to establish the display period and the valid period of the important message to the information of the important message display control, the senders can control the period for displaying the important message.

The important message display area can be divided, so that flexible display can be achieved even when the e-mail attached with plural important messages is received.

Further, the important message display area can be time-shared, so that more flexible display can be achieved even when the plural important messages, which are too many to be clearly displayed in the divided display areas described above, are attached to one e-mail.

## Claims

1. An electric mail system having a plurality of communication units connected each other through a network in which the communication unit comprises:
a sending section for sending an electric mail, a receiving section for receiving the electric mail, a display section for displaying the electric mail, and a mail data storing section for storing the sent and received electric mails,
the electric mail, which is sent from the communication unit, including a mail header having an extension field, a mail text and an attachment file,
the sending section including a mail preparing section for inserting in the extension field a control code defining a certain operation and attaching an important message as an attachment file at the sending of the electric mail, and
the display section including a mail list display area, a mail content display area and an important message display area,
the receiving section of the communication unit operating as a receive device including an extract section for extracting the control code inserted in the extension field,
wherein the display section displays the important message attached to the received electric mail in the important message display area when the extract section extracts the control code from the received electric mail.

2. An electric mail system according to claim 1, wherein the communication unit further comprises:
an adding section for adding distinctive information informing that the important message is effective to the electric mail sent from a particular sender;
a detecting section for detecting the distinctive information in the electric mail with the distinctive information added by the adding section; and
a control section for controlling the display of the important message in the important message display area when the electric mail attached with the important message is received and the distinctive information is detected in the received electric mail.

3. An electric mail system according to claim 1 or 2, wherein the control code comprises information defining a display period and a valid period of the important message.

4. An electric mail system according to claim 1 or 2, wherein a plurality of important messages are attached to the electric mail as the attachment files.

5. An electric mail system according to claim 4, wherein, when the plurality of the important messages are attached to the electric mail, the display section divides the important message display area to display the important messages simultaneously.

6. An electric mail system according to claim 4, wherein, when the plurality of important messages are attached to the electric mail, the display section time-shares the important message display area to display the plural important messages in turn.
